(19) Europäisches Patentamt

European Patent Office

Office européen des brevets

(11) **EP 1 510 799 A1**

(12) **DEMANDE DE BREVET EUROPEEN**

(43) Date de publication:
**02.03.2005 Bulletin 2005/09**

(51) Int Cl.⁷: **G01J 3/50**, H04N 5/00

(21) Numéro de dépôt: **04027392.2**

(22) Date de dépôt: **23.05.1997**

(84) Etats contractants désignés:
**AT BE CH DE DK ES FI FR GB GR IE IT LI LU MC NL PT SE**

(30) Priorité: **23.05.1996 FR 9606425**

(62) Numéro(s) de document de la (des) demande(s) initiale(s) en application de l'article 76 CBE:
**97925130.3 / 0 840 882**

(71) Demandeur: **L'OREAL**
**75008 Paris (FR)**

(72) Inventeurs:
• **Caisey-Bluteau, Laurence**
**95240 Cormeilles en Parisis (FR)**

• **Aubert, Johan**
**92110 Clichy (FR)**

(74) Mandataire: **Tanty, François**
**Nony & Associés,**
**3, rue de Penthièvre**
**75008 Paris (FR)**

Remarques:
Cette demande a été déposée le 18 - 11 - 2004 comme demande divisionnaire de la demande mentionnée sous le code INID 62.

(54) **Procédé et dispositif de mesure de la couleur**

(57) La présente invention concerne un procédé de correction de la réponse d'un dispositif de visualisation (4) comportant des trames de pixels. Lors d'une transition du niveau de commande des pixels d'une même trame entraînant une variation de la luminance entre au moins un pixel de cette trame et le pixel immédiatement suivant, eu égard au sens de balayage de la trame, on choisit le niveau de commande dudit pixel immédiatement suivant en fonction de la vitesse de variation de la luminance des pixels situés sur une même trame lorsque le niveau de commande desdits pixels varie.

FIG.1

**Description**

La présente invention concerne un dispositif et un procédé de mesure de la couleur.

Il est connu d'utiliser pour mesurer la couleur d'un objet opaque un colorimètre comprenant une source lumineuse pour illuminer l'objet, un dispositif optique d'analyse de la lumière réfléchie par cet objet et des moyens de calcul pour déterminer, à partir de signaux délivrés par le dispositif optique d'analyse, les composantes trichromatiques X, Y et Z de la couleur de l'objet dans un système colorimétrique de référence, par exemple celui adopté en 1931 par la Commission Internationale de l'Eclairage (CIE).

Le dispositif optique d'analyse comporte des moyens pour diviser la lumière réfléchie par l'objet en trois faisceaux traversant chacun un système filtrant et aboutissant sur une cellule photoélectrique associée.

Ce type de colorimètre connu présente l'inconvénient de nécessiter un contact direct du dispositif optique d'analyse avec l'objet dont on désire mesurer la couleur, et de ne pas être adapté à effectuer une mesure à distance de la couleur d'un objet ou une mesure de la couleur d'un objet non opaque diffusant ou absorbant la lumière tout en laissant passer une partie, tel que la peau ou certains plastiques ou produits de maquillage.

Pour pallier ces inconvénients, on a cherché à mesurer la couleur au moyen d'une caméra vidéo.

Toutefois, à la connaissance de la société déposante, il n'existe pas encore de dispositif de mesure à distance de la couleur d'un objet, notamment non opaque, qui soit susceptible de permettre une mesure précise, fiable et rapide, de la couleur tout en restant d'un coût relativement modéré.

La présente invention a notamment pour objet de proposer un nouveau dispositif de mesure de la couleur, de tout type d'objet, mettant en oeuvre une caméra vidéo, qui permette une mesure précise, fiable et rapide, de la couleur tout en étant relativement peu coûteux et d'une utilisation aisée.

L'invention y parvient grâce à un dispositif de mesure de la couleur, comportant :

- une chaîne d'acquisition incluant une caméra vidéo, ladite chaîne d'acquisition étant apte à délivrer des signaux représentatifs des composantes trichromatiques de la couleur d'un objet, placé dans le champ d'observation de la caméra, dans un système colorimétrique lié à ladite chaîne d'acquisition, et
- des moyens de traitement agencés pour déterminer, à partir desdits signaux, les composantes trichromatiques de la couleur de l'objet dans un système colorimétrique de référence en utilisant une matrice de passage du système colorimétrique lié à ladite chaîne d'acquisition vers le système colorimétrique de référence et une fonction de correction des non-linéarités de ladite chaîne d'acquisition, ladite matrice de passage et ladite fonction de correction étant calculées par un processus itératif à partir des composantes trichromatiques connues dans le système colorimétrique de référence de trois couleurs primaires et d'au moins deux niveaux de gris et des composantes trichromatiques correspondantes des mêmes couleurs et niveaux de gris dans le système colorimétrique lié à ladite chaîne d'acquisition, obtenues à partir de l'observation par ladite caméra vidéo desdites couleurs primaires et desdits niveaux de gris.

Dans un exemple de réalisation préféré de l'invention, le dispositif comporte en outre une chaîne de visualisation pour restituer tout ou partie de l'image observée par la caméra vidéo après traitement, par ladite fonction de correction, desdits signaux délivrés par ladite chaîne d'acquisition.

De préférence, ladite chaîne de visualisation comporte un dispositif de visualisation à tube cathodique.

Avantageusement, le dispositif comporte une source lumineuse pour éclairer l'objet placé dans le champ d'observation de la caméra, cette source présentant un spectre d'émission continu I($\lambda$) choisi de manière à se rapprocher d'un illuminant de référence D($\lambda$).

La caméra comportant un ensemble de filtres optiques de spectres FR($\lambda$), FV($\lambda$) et FB($\lambda$) pour décomposer sur les capteurs de cette caméra l'image observée en images de couleurs primaires, on filtre avantageusement la source par un ou plusieurs filtres dont la fonction de filtrage résultante $F(\lambda)$ est choisie de manière à minimiser l'erreur des écarts entre les produits D($\lambda$)x($\lambda$),D($\lambda$)y($\lambda$),D($\lambda$)z($\lambda$) et une combinaison linéaire des produits $F(\lambda).I(\lambda).FR(\lambda)$, $F(\lambda).I(\lambda).FV(\lambda)$, $F(\lambda).I(\lambda).FB(\lambda)$ où x($\lambda$),y($\lambda$) et z($\lambda$) sont les coordonnées trichromatiques spectrales dans le système colorimétrique de référence.

De préférence, ledit illuminant de référence est l'illuminant de spectre $D_{65}(\lambda)$ de la CIE.

L'invention a encore pour objet un procédé de mesure de la couleur d'un objet à partir d'une chaîne d'acquisition incluant une caméra vidéo apte à délivrer des signaux représentatifs des composantes trichromatiques, dans un système colorimétrique lié à ladite chaîne d'acquisition, de la couleur d'un objet placé dans le champ d'observation de la caméra, caractérisé en ce qu'il comprend les étapes consistant à :

- placer successivement ou simultanément dans le champ d'observation de la caméra trois couleurs primaires et au moins deux niveaux de gris, les composantes trichromatiques desdites couleurs primaires et desdits niveaux de gris étant connues dans un système colorimétrique de référence,

- calculer par un processus itératif, à partir desdites composantes trichromatiques dans ledit système colorimétrique de référence et des composantes trichromatiques correspondantes dans le système colorimétrique lié à ladite chaîne d'acquisition, obtenues à partir de l'observation par ladite caméra vidéo desdites couleurs primaires et desdits niveaux de gris, une matrice de passage du système colorimétrique lié à la chaîne d'acquisition vers le système colorimétrique de référence et une fonction de correction des non-linéarités de ladite chaîne d'acquisition,

- déterminer, en utilisant ladite matrice de passage et ladite fonction de correction ainsi calculées, les composantes trichromatiques dans le système colorimétrique de référence de la couleur d'un objet placé dans le champ d'observation de la caméra.

Avantageusement, dans ce procédé, on visualise en outre au moyen d'une chaîne de visualisation la couleur de l'objet après correction des non-linéarités de la chaîne d'acquisition.

Avantageusement, on corrige en outre, dans ce procédé, les non-linéarités de la chaîne de visualisation.

Dans un exemple particulier de mise en oeuvre du procédé selon l'invention, la chaîne de visualisation comprend un dispositif de visualisation à tube cathodique.

Dans un exemple particulier de mise en oeuvre du procédé selon l'invention, on détermine une fonction de correction des non-linéarités de la chaîne de visualisation en :

- affichant deux zones d'une même couleur mais avec des luminances susceptibles d'être différentes, la couleur de l'une des zones étant obtenue par une juxtaposition de pixels de niveaux de commande distincts et la couleur de l'autre zone étant obtenue par un ensemble de pixels de même niveau de commande correspondant à la moyenne des niveaux de commande des pixels de l'autre zone,

- rendant égales les luminances des deux zones pour un observateur en agissant sur le niveau de commande des pixels de l'une des zones.

On déduit de la valeur des niveaux de commande des pixels de chacune desdites zones avant et après égalisation des luminances une information pour le calcul de ladite fonction de correction des non-linéarités de la chaîne de visualisation.

De préférence, l'une des zones est tramée.

Avantageusement, cette zone qui est tramée comporte une trame sur deux qui est noire.

Dans le cas où la chaîne de visualisation comporte un dispositif de visualisation à tube cathodique, lors d'une transition du niveau de commande des pixels d'une même trame entraînant une variation de luminance entre au moins un pixel de cette trame et le pixel immédiatement suivant, eu égard au sens de balayage de la trame, on choisit avantageusement le niveau de commande dudit pixel immédiatement suivant en fonction de la vitesse de variation du signal de commande du faisceau d'électrons atteignant les pixels situés sur une même trame lorsque le niveau de commande desdits pixels varie.

Pour déterminer la correction à apporter pour tenir compte de la vitesse de variation du signal de commande du faisceau d'électrons atteignant les pixels situés sur une même trame, on peut avantageusement procéder comme suit.

On affiche deux zones d'une même couleur mais avec des luminances susceptibles d'être différentes, la couleur de l'une des zones étant obtenue par une juxtaposition sur une même trame de pixels de niveaux de commande distincts et la couleur de l'autre zone étant obtenue par un ensemble de pixels de même niveau de commande, puis on rend égales les luminances des deux zones pour un observateur en agissant sur le niveau de commande de la luminance des pixels de l'une des zones.

On déduit de la valeur des niveaux de commande de la luminance des pixels de chacune desdites zones avant et après égalisation une information pour le calcul de la correction à apporter pour tenir compte de la vitesse de variation du signal de commande du faisceau d'électrons atteignant les pixels situés sur une même trame lorsque le niveau de commande des pixels varie.

De préférence, la zone formée par la juxtaposition de pixels de luminances distinctes comporte un pixel sur deux, dans le sens du balayage, dont la luminance est commandée à un niveau différent de celui du pixel précédent.

L'invention a encore pour objet un procédé de correction de la réponse d'un dispositif de visualisation comportant des trames de pixels, selon lequel lors d'une transition du niveau de commande des pixels d'une même trame entraînant une variation de luminance entre au moins un pixel de cette trame et le pixel immédiatement suivant, eu égard au sens de balayage de la trame, on choisit le niveau de commande dudit pixel immédiatement suivant en fonction de la vitesse de variation de la luminance des pixels situés sur une même trame lorsque le niveau de commande desdits pixels varie.

Avantageusement, on détermine une fonction de correction des non-linéarités de ce dispositif de visualisation en :

- affichant deux zones d'une même couleur mais avec des luminances susceptibles d'être différentes, la couleur de l'une des zones étant obtenue par une juxtaposition de pixels de niveaux de commande distincts et la couleur de l'autre zone étant obtenue par un ensemble de pixels de même niveau de commande,
- en rendant égales les luminances des deux zones pour un observateur en agissant sur le niveau de commande des pixels de l'une des zones, et
- en déduisant de la valeur des niveaux de commande des pixels de chacune desdites zones une information pour le calcul de ladite fonction de correction des non-linéarités du dispositif de visualisation.

Dans un mode particulier de mise en oeuvre de ce procédé, la zone composée de pixels de niveaux de commande distincts est tramée.

Avantageusement, cette zone tramée comporte une trame sur deux qui est noire.

Dans un autre mode particulier de mise en oeuvre du procédé, la zone composée de pixels de niveaux de commande distincts comporte un pixel sur deux, à chaque trame, dont le niveau de commande est différent de celui du pixel précédent sur cette trame.

Par ailleurs, dans un exemple particulier de mise en oeuvre d'un procédé selon l'invention, le processus itératif précité comporte les étapes consistant à :

- calculer une matrice de passage approchée à partir des composantes trichromatiques connues desdites couleurs primaires et desdits niveaux de gris et d'une fonction de correction approchée,
- calculer une nouvelle fonction de correction approchée en utilisant la matrice de passage approchée ainsi calculée et les composantes trichromatiques connues desdits niveaux de gris et en interpolant les valeurs manquantes,
- recommencer le calcul de la matrice de passage approchée et de la fonction de correction approchée jusqu'à atteindre un seuil de convergence fixé.

En variante, le processus itératif comprend les étapes consistant à :

- calculer une fonction de correction approchée à partir des composantes trichromatiques connues desdites couleurs primaires et desdits niveaux de gris et d'une matrice de passage approchée,
- calculer une nouvelle matrice de passage approchée en utilisant les composantes trichromatiques connues desdits niveaux de gris et en interpolant les valeurs manquantes,
- recommencer le calcul de la fonction de correction approchée et de la matrice de passage approchée jusqu'à atteindre un seuil de convergence fixé.

Avantageusement, on corrige en outre l'inhomogénéité de l'éclairement par la source de l'objet et les aberrations optiques de la caméra en mesurant la luminance de l'image en différents points et en la comparant avec la luminance en point de référence, par exemple le centre de l'image.

L'invention sera mieux comprise à la lecture de la description détaillée qui va suivre, d'un exemple de réalisation non limitatif de l'invention, et à l'examen du dessin annexé sur lequel :

- la figure 1 est une vue schématique d'un dispositif de mesure de la couleur conforme à un exemple de réalisation de l'invention,
- la figure 2 est une modélisation de la chaîne d'acquisition,
- la figure 3 est une modélisation du traitement conduisant à la détermination des composantes trichromatiques dans le système colorimétrique de référence,
- la figure 4 est un organigramme illustrant le processus de calcul itératif de la matrice de passage et d'une fonction de correction des non-linéarités de la chaîne d'acquisition,
- la figure 5 est une modélisation du traitement conduisant à la détermination de composantes trichromatiques corrigées dans le système colorimétrique lié à la chaîne de visualisation,
- la figure 6 est une modélisation du traitement des signaux d'entrée dans un dispositif de visualisation à tube cathodique,
- les figures 7 et 8 représentent deux mires servant au calibrage de la chaîne de visualisation et,
- les figures 9 et 10 illustrent schématiquement la variation de la luminance des pixels d'une même trame en fonction de la variation du niveau de commande de ces pixels, respectivement sans et avec correction anticipée pour tenir compte de la vitesse de variation du signal de commande du faisceau d'électrons atteignant les pixels lorsque le niveau de commande varie.

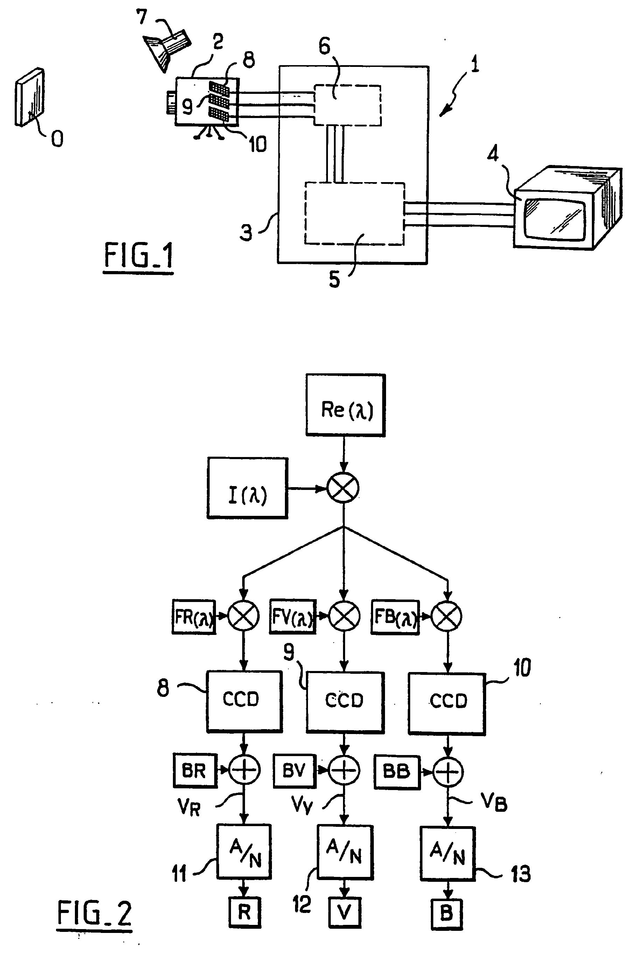

On a représenté sur la figure 1 un dispositif 1 conforme à un exemple de réalisation non limitatif de l'invention, permettant de mesurer à distance la couleur d'un objet O.

Le dispositif 1 comporte une caméra vidéo 2, un micro-ordinateur 3 et un dispositif de visualisation à tube cathodique 4.

La caméra 2 comporte trois capteurs 8, 9 et 10 du type CCD, aptes à délivrer respectivement des signaux électriques sous forme analogique $V_R$, $V_V$ et $V_B$ représentatifs des niveaux de rouge, de vert et de bleu en chaque point de l'image telle qu'observée et analysée par la caméra 2, de façon connue en soi.

Une source lumineuse 7 permet d'éclairer l'objet O placé dans le champ de la caméra 2. Avantageusement, on utilise une source lumineuse au xénon qui permet de se rapprocher du spectre $D_{65}(\lambda)$ défini par la CIE.

Le micro-ordinateur 3 comporte une unité centrale 5 et un convertisseur analogique/numérique 6 à trois voies, relié à l'unité centrale 5 et permettant de convertir sous une forme numérique les signaux analogiques $V_R$, $V_V$ et $V_B$ délivrés par la caméra 2.

Les signaux convertis sous forme numérique et respectivement notés R, V et B sont ensuite envoyés à l'unité centrale 5.

Dans l'exemple particulier décrit, les signaux R, V et B sont codés chacun sur 8 bits et les données acquises par la caméra sont en chaque point de l'image constituées par un triplet (R,V,B) de trois nombres entiers compris entre 0 et 255.

Bien entendu, on ne sort pas du cadre de l'invention en codant les signaux sur un nombre différent de bits.

La caméra 2 et le convertisseur 6 constituent une chaîne d'acquisition que l'on a modélisée sur la figure 2.

Le spectre lumineux réfléchi en chaque point de l'objet O observé par la caméra est le produit du spectre de la source lumineuse $I(\lambda)$ et du spectre de réflectance $Re(\lambda)$ en ce point.

Le système optique de la caméra 2 comporte trois filtres optiques de spectres respectifs $FR(\lambda)$, $FV(\lambda)$ et $FB(\lambda)$ pour décomposer sur les capteurs CCD 8, 9 et 10 l'image observée par la caméra en images de couleurs primaires rouge, vert et bleu.

L'ensemble des composants électroniques de la chaîne d'acquisition introduit un bruit qui peut se décomposer en une composante alternative et une composante continue BR, BV et BB respectivement pour chacune des voies.

Les niveaux bas et haut de digitalisation de chaque voie 11,12 ou 13 du convertisseur 6 sont réglables.

Le réglage du niveau bas de digitalisation de chaque voie est effectué de manière à éliminer la composante continue du bruit et l'on procède avec le cache de la caméra sur l'objectif de cette dernière, en augmentant progressivement le niveau bas de digitalisation jusqu'à ce que la zone la moins lumineuse sur l'image corresponde à un signal numérique, en sortie du convertisseur, égal à l'unité pour chaque voie.

Le réglage du niveau haut de digitalisation s'effectue en plaçant devant le champ d'observation de la caméra l'objet le plus lumineux susceptible d'être observé.

On utilise avantageusement une surface blanche.

On règle le niveau haut de digitalisation jusqu'à ce que la zone la plus lumineuse observée sur l'image corresponde en sortie à la valeur maximale du signal numérique moins une unité, c'est-à-dire la valeur 254 pour chaque voie dans l'exemple décrit.

Au besoin, on diminue l'intensité lumineuse de la source 7 si un tel réglage du niveau haut n'est pas possible.

L'atténuation du bruit alternatif peut s'effectuer en moyennant plusieurs acquisitions successives de la même image.

Les signaux numériques (R,V,B) délivrés par le convertisseur 6 sont traités dans l'unité centrale 5 pour déterminer en chaque point de l'image observée par la caméra 2 les composantes trichromatiques dans un système colorimétrique de référence, tel que le système colorimétrique XYZ de la CIE. Ce traitement corrige les non-linéarités de la chaîne d'acquisition, c'est-à-dire essentiellement la non-linéarité des capteurs CCD 8, 9, 10 ainsi que celle du convertisseur 6. Ce traitement corrige en outre avantageusement l'inhomogénéité de l'illumination de l'objet 0 par la source 7 et les aberrations optiques de la caméra 2.

Bien entendu, on ne sort pas du cadre de l'invention en choisissant comme système colorimétrique de référence un système colorimétrique de référence autre que le système colorimétrique XYZ de la CIE.

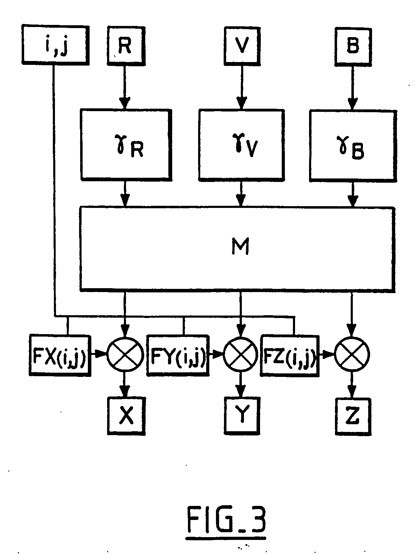

On a modélisé sur la figure 3 le traitement effectué par l'unité centrale 5.

On a désigné par $\Upsilon_R$, $\Upsilon_V$ et $\Upsilon_B$ les composantes de la fonction $\Upsilon$ de correction des non-linéarités des capteurs CCD 8, 9, 10 et du convertisseur 6 pour chacune des voies de rouge, vert et bleu.

La fonction de passage du système colorimétrique lié à la chaîne d'acquisition au système colorimétrique de référence peut s'écrire sous la forme d'une matrice M.

On désigne par X,Y et Z les composants trichromatiques dans le système colorimétrique de référence.

On a désigné par FX(i,j), FY(i,j) et FZ(i,j) les fonctions de correction de l'inhomogénéité de l'illumination de l'objet par la source 7 et des aberrations optiques de la caméra 2, en fonction des coordonnées i, j de chaque point considéré sur l'image.

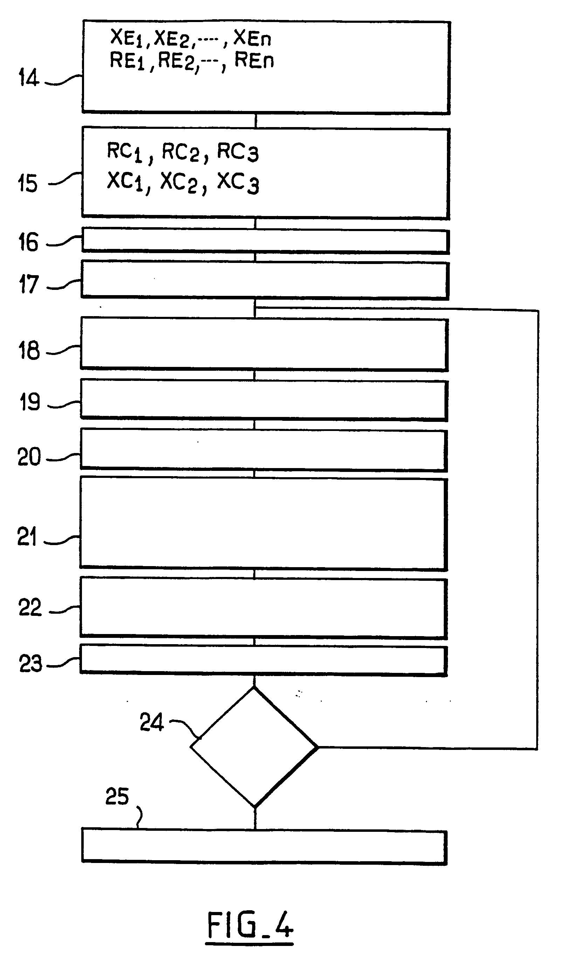

Le calcul des coefficients de la matrice M ainsi que le calcul des composantes $\Upsilon_R$, $\Upsilon_V$ et $\Upsilon_B$, va maintenant être décrit en référence à l'algorithme représenté sur la figure 4.

Tout d'abord, on acquiert à l'étape 14 un premier ensemble de données, utilisées pour la suite du traitement en plaçant successivement ou simultanément dans le champ d'observation de la caméra n échantillons colorimétriques correspondant à des niveau gris distincts, dont les composantes trichromatiques (X,Y,Z) dans le système colorimétrique de référence XYZ sont connues.

Ensuite, on acquiert en plaçant à l'étape ultérieure 15 successivement ou simultanément trois échantillons colorimétriques correspondant à trois couleurs primaires, dont les composantes trichromatiques dans le système colorimétrique de référence sont connues, un deuxième ensemble de données utilisées pour la suite du traitement. Les composantes trichromatiques, dans le le système colorimétrique de référence peuvent être mesurées à l'aide d'un spectrocolorimètre.

Ces couleurs primaires peuvent être par exemple le rouge, le vert et le bleu ou le magenta, le cyan et le jaune. De manière générale, elles peuvent être quelconque à condition de former une base dans le système colorimétrique de référence.

De préférence, ces couleurs primaires sont choisies de manière à ce que le triangle qu'elles forment dans le plan chromatique du système colorimétrique de référence englobe l'ensemble des couleurs à mesurer.

Les échantillons colorimétiques utilisés sont de préférence opaques et de couleur uniforme, donc mesurables par un colorimètre ou spectrocolorimètre classique.

La mesure des différents gris et couleurs primaires s'effectue de préférence au centre du champ d'observation de la caméra 2 et sur une surface suffisamment petite, représentant de préférence seulement 10% environ de la surface totale couverte par le champ d'observation de la caméra, et qui pourra être considérée comme éclairée de façon uniforme par la source 7.

De préférence, pour effectuer l'acquisition des différents gris et couleurs primaires, la position de la source 7 et celle de la caméra 2 par rapport aux échantillons, ainsi que le type d'éclairage utilisé, se rapprochent le plus possible de la configuration de mesure du colorimètre ou spectrocolorimètre utilisé pour connaître les composantes trichromatiques de la couleur des échantillons colorimétriques utilisés dans le système colorimétrique de référence.

La chaîne d'acquisition délivre à l'étape 14 des signaux représentatifs des composantes trichromatiques des n niveaux de gris sous la forme de triplets de valeurs notés de façon simplifiée $RE_1$, $RE_2$, ..., $RE_n$, et les triplets correspondants dans le système colorimétrique de référence sont respectivement notés également de façon simplifiée $XE_1$, $XE_2$, ..., $XE_n$.

La notation $RE_i$ désigne en fait un triplet de valeurs (R,B,V) et la notation $XE_i$ le triplet de valeurs correspondant (X,Y,Z).

La chaîne d'acquisition délivre à l'étape 15 des triplets de composantes trichromatiques $RC_1$, $RC_2$ et $RC_3$, dont les triplets correspondants dans le système colorimétrique de référence sont $XC_1$, $XC_2$ et $XC_3$ respectivement, en utilisant le même type de notation simplifiée que précédemment.

A l'étape 16, on initialise un paramètre d'itération k à la valeur 0 et à l'étape 17, on initialise une fonction de correction approchée $\Upsilon^k$, susceptible de varier à chaque itération, de composantes $\Upsilon_R^k$, $\Upsilon_V^k$, $\Upsilon_B^k$ .

A l'itération k=0 on choisit $\Upsilon_R^o$, $\Upsilon_V^o$, $\Upsilon_B^o$ égales à la fonction identité.

A l'étape 18, on calcule pour chaque itération k une matrice approchée $P^k$ de passage du système colorimétrique de référence XYZ au système colorimétrique lié à la chaîne d'acquisition par la formule :

$$P^k = (\Upsilon^k)([RC_1 \; RC_2 \; RC_3]) \; [XC_1 \; XC_2 \; XC_3]^{-1}$$

A l'étape 19, on calcule n valeurs de la fonction de correction approchée $\Upsilon^k$ par la formule :

$$\Upsilon^k (RE_i) = P^k XE_i$$

pour *i* allant de 1 à n

A l'étape 20, on interpole les valeurs manquantes de la fonction de correction $\Upsilon^k$ à l'itération k de la manière suivante.

Pour la composante $\Upsilon_R^k$ par exemple :

si $\Upsilon_R^k(\omega_o)$ est connu et si $\Upsilon_R^k(\omega_1)$ est connu alors pour $\omega_o < \omega < \omega_1$,
on détermine $\Upsilon_R^k (\omega)$ par la formule :

$$\log(\Upsilon_R^k(\omega)/255) =$$

$$((\omega-\omega_1)/(\omega_0-\omega_1)).\log(\Upsilon_R^k(\omega_o)/255)+((\omega-\omega_0)/(\omega_0-\omega_1)).\log(\Upsilon_R^k(\omega_1)/255)$$

On procède de même pour $\Upsilon_V{}^k$ et $\Upsilon_B{}^k$.

A l'étape 21, on effectue une normalisation des fonctions de correction $\Upsilon_R{}^k$, $\Upsilon_V{}^k$, et $\Upsilon_B{}^k$ :

$$255.\Upsilon_R{}^k(\omega)/\Upsilon_R{}^k(255) \rightarrow \Upsilon_R{}^k(\omega)$$

$$255.\Upsilon_V{}^k(\omega)/\Upsilon_V{}^k(255) \rightarrow \Upsilon_V{}^k(\omega)$$

$$255.\Upsilon_B{}^k(\omega)/\Upsilon_B{}^k(255) \rightarrow \Upsilon_B{}^k(\omega)$$

pour $\omega$ allant de 1 à n.

A l'étape 22, on calcule l'erreur $e^k$ par la formule :

$$e^k = (\Sigma((M^k\Upsilon^k(RC\ i)-XCi)^2)^{\frac{1}{2}}$$

pour $i$ allant de 1 à n, avec $M^k = (P^k)^{-1}$.

A l'étape 23, on incrémente le paramètre d'itération k.

A l'étape 24, on teste s'il y a convergence de l'erreur $e^k$ ou non.

Si tel est le cas, on arrête le processus itératif à l'étape 25 et sinon on retourne à l'étape 18 de calcul d'une nouvelle matrice de passage approchée $P^k$ et d'une nouvelle fonction approchée $\Upsilon^k$ de correction des non-linéarités.

A l'étape 25, on calcule la matrice définitive M de passage du système colorimétrique lié à la chaîne d'acquisition au système colorimétrique de référence par la formule :

$$M=M^k =\Upsilon^k([XC_1\ XC_2\ XC_3])[RC_1\ RC_2\ RC_3]^{-1}$$

Le calcul de la matrice de passage M et de la fonction $\Upsilon$ de correction des non-linéarités s'effectue ainsi à partir d'un procédé itératif dans lequel à chaque itération on calcule une matrice de passage approchée et une fonction de correction des non-linéarités approchée.

Une fois le calcul des composantes $\Upsilon_R$, $\Upsilon_V$, et $\Upsilon_B$ de la fonction $\Upsilon$ et le calcul de la matrice de passage M effectués, on détermine les fonctions de correction de l'inhomogénéité de l'illumination de l'objet 0 par la source 7 et de correction des aberrations optiques de la caméra, c'est-à-dire les fonctions FX(i,j), FY(i,j) et FZ(i,j) précitées.

Le calcul des fonctions FX(i,j), FY(i,j) et FZ(i,j) s'effectue en acquérant l'image d'un objet de couleur uniforme occupant la totalité du champ d'observation de la caméra et en déterminant la correction à apporter de manière à ce que tous les points de l'image aient les mêmes composantes trichromatiques que le centre de l'image.

Plus précisément, dans l'exemple décrit, on procède en effectuant la moyenne des composantes trichromatiques d'un ensemble de points appartenant à une fenêtre de mesure, cet ensemble de points étant centré sur un point de coordonnées i, j.

On obtient ainsi des valeurs moyennes IMX(i,j), IMY(i,j), IMZ(i,j) et l'on détermine les fonctions FX(i,j), FY(i,j) et FZ(i,j) par les formules suivantes :

$$FX\ (i,j) = IMX\ (i_{centre}, j_{centre})/IMX\ (i,j)$$

$$FY\ (i,j) = IMY\ (i_{centre}, j_{centre})/IMY\ (i,j)$$

$$FZ\ (i,j) = IMZ\ (i_{centre}, j_{centre})/IMZ\ (i,j)$$

où $i_{centre}$, $j_{centre}$ sont les coordonnées du centre de l'image.

Le passage des composantes (R,V,B) aux composantes (X,Y,Z) tel qu'il vient d'être décrit peut introduire un biais dans le cas où les produits $D_{65}(\lambda).x(\lambda)$, $D_{65}(\lambda).y(\lambda)$ et $D_{65}(\lambda).z(\lambda)$ ne sont pas des combinaisons linéaires des produits $I(\lambda).FR(\lambda), I(\lambda).FV(\lambda), I(\lambda).FB(\lambda)$ ce qui est le cas la plupart du temps.

Afin de réduire ce biais, on peut avantageusement filtrer la source avec un filtre optique $F$ défini de manière à minimiser l'erreur des écarts entre les produits $D_{65}(\lambda).x(\lambda), D_{65}(\lambda).y(\lambda), D_{65}(\lambda).z(\lambda)$ et une combinaison linéaire des produits

$F(\lambda).I(\lambda).FR(\lambda)$, $F(\lambda)I(\lambda).FV(\lambda)$, $F(\lambda)$ $I(\lambda).FB(\lambda)$.

Ce filtre sert à optimiser la mesure de la couleur et est adapté à la chaîne d'acquisition.

On comprend que l'exemple particulier de réalisation de l'invention qui vient d'être décrit permet de connaître avec précision les composantes (X,Y,Z), dans un système colorimétrique de référence, d'un objet placé dans le champ d'observation d'une caméra vidéo.

on peut ainsi inspecter sans contact physique des objets, par exemple des récipients ou des étiquettes se déplaçant à grande vitesse dans une chaîne de fabrication, en vue de déceler une variation de la couleur de ces objets ou des défauts de surface.

Il peut s'avérer également intéressant de restituer fidèlement au moyen d'une chaîne de visualisation la couleur de l'objet observé par la caméra.

Avantageusement, on effectue à la fois une mesure de la couleur et l'on restitue celle-ci fidèlement au moyen de la chaîne de visualisation. On peut toutefois, sans sortir du cadre de l'invention, effectuer l'un ou l'autre.

Dans le cas où l'on se contente de restituer fidèlement la couleur de l'objet au moyen de la chaîne de visualisation, il n'est pas nécessaire d'afficher pour l'utilisateur les composantes trichromatiques de la couleur de l'objet dans le système colorimétrique de référence, qui ont été calculées par l'unité centrale 5 de la manière indiquée ci-dessus.

L'envoi des signaux (R,V,B) de sortie du convertisseur 6 directement en entrée de la chaîne de visualisation conduirait à une restitution non satisfaisante de la couleur de l'objet sur l'écran du dispositif de visualisation 4, en raison notamment des non-linéarités de la chaîne d'acquisition et de celles de la chaîne de visualisation et de la différence entre les systèmes colorimétriques liés respectivement à la chaîne d'acquisition et à la chaîne de visualisation.

Une première amélioration est apportée par la correction des non-linéarités de la chaîne d'acquisition comme décrit précédemment.

Toutefois, on peut améliorer encore davantage la qualité de la restitution de la couleur de l'objet lorsque l'on corrige les non-linéarités de la chaîne de visualisation.

Cette correction est effectuée dans l'unité centrale 5.

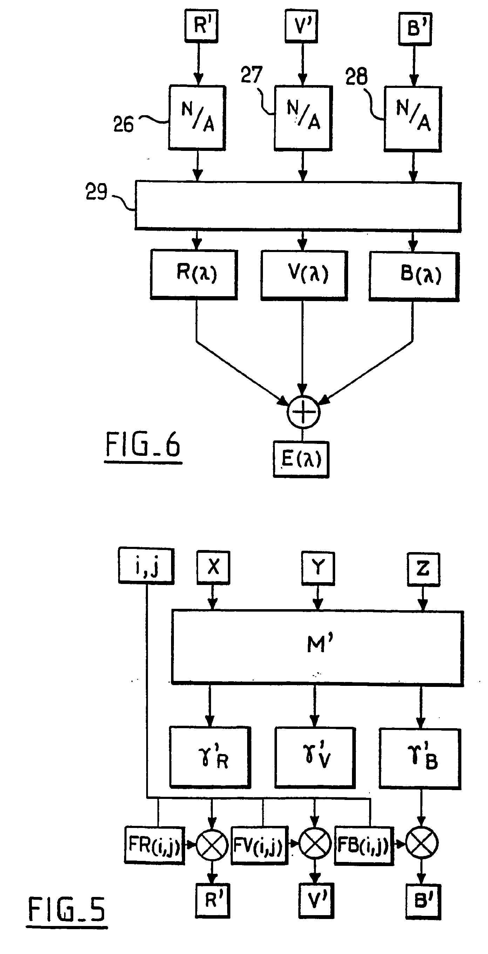

On a modélisé sur la figure 5 le traitement pour passer des composantes trichromatiques (X,Y,Z) dans le système colorimétrique de référence XYZ aux composantes trichromatiques (R',V',B') à l'entrée de la chaîne de visualisation.

On commence par transformer les composantes trichromatiques (X,Y,Z) précédemment déterminées en composantes trichromatiques dans le système colorimétrique lié au dispositif de visualisation, au moyen d'une matrice de passage M', puis on applique à chacune des composantes ainsi obtenue une fonction de correction $\Upsilon''$ non liée à la position sur l'écran, de composantes $\Upsilon_R'$, $\Upsilon_V'$, et $\Upsilon_B'$ et une fonction de correction de l'inhomogénéité de l'éclairement de l'écran FR(i,j), FV(i,j), FB(i,j) liée à la position sur ce dernier.

On a modélisé sur la figure 6 le traitement des signaux numériques (R',V',B') reçus par la chaîne de visualisation et conduisant à l'obtention d'une image sur l'écran du dispositif de visualisation.

Les composantes trichromatiques (R',V',B') pour chaque point de l'image sont transformées en signaux analogiques au moyen d'un convertisseur numérique/analogique à trois voies 26,27 et 28. Les signaux analogiques en sortie du convertisseur sont traités de façon connue en soi en 29 pour commander chacun un faisceau cathodique destiné à illuminer des régions phosphorescentes de l'écran produisant en réponse au flux d'électrons incident une émission lumineuse de couleur déterminée. L'addition des spectres d'émission R($\lambda$), V($\lambda$), B($\lambda$) des régions phosphorescentes, produisant respectivement les couleurs rouge, vert et bleu, conduit à un spectre résultant E($\lambda$) en chaque point de l'image.

Cette matrice de passage M' est calculée par la connaissance des composantes trichromatiques $(X_{R'}, V_{R'}, Z_{R'})$, $(X_{V'}, Y_{V'}, Z_{V'})$ et $(X_{B'}, Y_{B'}, Z_{B'})$ dans le système de référence colorimétrique XYZ des couleurs correspondant respectivement aux triplets (255,0,0), (0,255,0) et (0,0,255) en entrée pour chaque point de l'image.

La matrice de passage M' a pour vecteurs colonnes les coordonnées dans le système colorimétrique de référence des trois couleurs primaires considérées.

$$M' = \begin{matrix} X_{R'} & X_{V'} & X_{B'} \\ Y_{R'} & Y_{V'} & Y_{B'} \\ Z_{R'} & Z_{V'} & Z_{B'} \end{matrix}$$

Pour calculer les composantes $\Upsilon''_R$, $\Upsilon''_V$, et $\Upsilon''_B$ de la fonction de correction $\Upsilon''$, on peut utiliser, connaissant la matrice M', un colorimètre d'écran pour mesurer la lumière émise au centre de l'image en fonction de triplets successifs et différents de valeurs d'entrée (R',V',B').

On peut encore déterminer les composantes $\Upsilon_R'$, $\Upsilon_V'$ et $\Upsilon_B'$ sans colorimètre d'écran de la façon suivante.

On tient compte du fait que la luminance W en chaque point de l'écran est liée à la tension V commandant le faisceau d'électrons qui l'atteint par la formule approximative suivante :

$$\log(W/W_{max}) = k_1 + k_2 \log(V/V_{max}) + k_3 (\log(V/V_{max})^2 + k_4 (\log(V/V_{max}))^3$$

On distingue alors deux domaines pour les valeurs R',V' ou B' d'entrée : [0,64] et [64,255].

Pour chaque domaine, on détermine les paramètres $k_1$, $k_2$, $k_3$ et $k_4$ par la valeur de la luminance lorsque le signal numérique d'entrée vaut successivement 0,32, 64,128 pour le premier domaine et 32,64,128,255 pour le second.

A titre d'exemple, on suppose que l'on commence par vouloir déterminer la composante $\Upsilon''_R$.

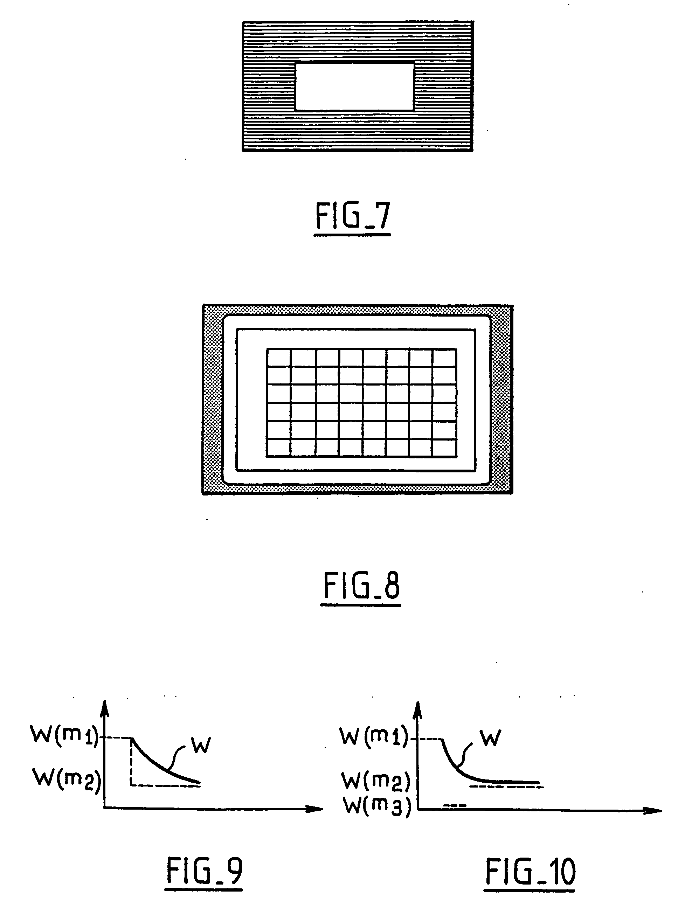

On affiche sur l'écran une mire telle qu'illustrée sur la figure 7, présentant au centre un rectangle de couleur rouge correspondant au choix de (128,0,0) en entrée. On inclut le rectangle central dans un rectangle tramé avec une ligne sur deux de couleur rouge correspondant à (255,0,0) en entrée et avec une ligne sur deux de couleur noire correspondant à (0,0,0) en entrée.

On modifie ensuite le cas échéant le signal numérique en entrée (R',0,0) qui commande la luminance du rectangle central jusqu'à ce que la luminance de ce dernier et la luminance du rectangle tramé paraissent égales.

On déduit ensuite de la correction qu'il a fallu apporter au signal d'entrée pour obtenir cette égalisation la valeur de la fonction $\Upsilon''_R(128)$.

On recommence alors en affichant au centre un rectangle de couleur (64,0,0) entouré par un rectangle tramé avec une ligne sur deux de couleur rouge correspondant à ($\Upsilon''_R(128)$,0,0) et avec une ligne sur deux de couleur noire, ce qui permet de calculer $\Upsilon''_R(64)$,etc...

On détermine ensuite les valeurs des paramètres $k_1$, $k_2$, $k_3$ et $k_4$ et l'on calcule les valeurs manquantes de $\Upsilon''_R$ d'après la formule précédente.

On opère de même pour calculer $\Upsilon''_V$ et $\Upsilon''_B$.

L'inhomogénéité de l'éclairement de l'écran est principalement due à la dispersion du faisceau d'électrons qui frappe l'écran.

Afin de corriger cette inhomogénéité, on mesure pour chacune des trois voies de rouge, vert et bleu la luminance en différents points de l'écran.

Pour chaque voie de rouge, vert ou bleu, on calcule les facteurs correctifs à appliquer en chaque point de l'écran.

On a noté les fonctions de correction FR(i,j), FV(i,j) et FB(i,j) pour les voies de rouge, vert et bleu respectivement.

On considère que l'écran est calibré au centre, de sorte qu'il suffit de connaître les facteurs correctifs à appliquer en chaque point de coordonnées i,j de la surface de l'écran hors du centre pour obtenir un écran totalement calibré.

L'éclairement de l'écran en fonction des coordonnées i,j d'un point hors du centre et des coordonnées $i_{centre}$, $j_{centre}$ au centre de l'écran varie approximativement comme la fonction C(i,j) suivante :

$$C(i,j) = (((i-i_{centre})^2 + (j-j_{centre})^2)/r^2)*((1 + (i-i_{centre})^2)/r^2)^{1/2} *((1 + (j-j_{centre})^2)/r^2)^{1/2}$$

où r désigne le rayon de courbure de l'écran.

On mesure à l'aide d'un spectrocolorimètre ou d'un colorimètre d'écran l'intensité lumineuse pour chaque rectangle d'une grille de calibration telle que représentée sur la figure 8.

En comparant cette intensité avec l'intensité lumineuse au centre, on peut en déduire une pluralité de valeurs pour la fonction FR(i,j).

Connaissant ces valeurs il est alors possible de calculer les valeurs manquantes de la fonction FR(i,j) par interpolation à l'aide d'une fonction polynomiale de degré 3.

On obtient FV(i,j) et FB(i,j) de la même manière.

Par ailleurs, le tube cathodique se comporte comme un filtre passe-bas et la valeur du signal de commande du faisceau d'électrons atteignant, sur une même trame, un pixel dépend de la valeur du signal de commande du pixel précédent sur cette trame.

A titre d'exemple, on a représenté sur la figure 9 l'évolution de la variation de la luminance de pixels successifs situés sur une même trame en fonction de la variation du niveau de commande.

Plus précisément, on illustré le cas où le niveau de commande vaut $m_1$ pour les pixels situés au début de la trame et passe à $m_2$ pour les pixels suivants, la valeur $m_2$ étant inférieure à $m_1$.

On observe que la luminance W des pixels, en réponse au niveau de commande $m_2$, ne décroît pas brusquement de $W(m_1)$ à $W(m_2)$ mais de façon sensiblement exponentielle.

En d'autres termes, si le niveau de commande du pixel passe brusquement de la valeur $m_1$ à la valeur $m_2$, la luminance n'atteint pas immédiatement le niveau $W(m_2)$.

On corrige alors avantageusement le niveau de commande en anticipant le temps de montée ou de descente pour chacune des trois voies de rouge, vert et bleu.

La correction s'opère pour chaque trame dans le sens du balayage.

A supposer que l'on souhaite pour une même trame passer d'une luminance $W(m_1)$ correspondant à un niveau de commande $m_1$ à une luminance $W(m_2)$ correspondant à un niveau de commande $m_2$, on corrige par anticipation le niveau du signal de commande des pixels que l'on souhaite activer pour que ces derniers atteignent le niveau de luminance $W(m_2)$ plus rapidement.

Ainsi, on commande les pixels avec un niveau de commande $m_3$ inférieur à $m_2$, de manière à obtenir une décroissance plus rapide de la luminance comme illustré sur la figure 10.

Cette correction prédictive du niveau de commande n'apparaît pas sur la modélisation représentée sur la figure 5, dans un souci de clarté du dessin.

Pour déterminer la constante de temps permettant de calculer le temps de montée ou de descente du signal de commande du faisceau d'électrons, on peut procéder en affichant sur l'écran un premier rectangle d'une même couleur dont on commande un pixel sur deux de chaque trame composant ce rectangle avec des niveaux de commande de valeurs différentes.

On affiche également sur l'écran un deuxième rectangle de la même couleur et de même niveau de commande pour tous les pixels.

On peut ensuite déduire des valeurs des niveaux de commande des pixels composant les deux rectangles affichés sur l'écran la constante de temps et la correction à apporter aux niveaux de commande de ces pixels pour effectuer la correction prédictive précitée.

Finalement, l'invention permet de mesurer la couleur d'objets opaques ou non opaques, plans ou en relief, mobiles ou fixes, sans contact avec ces derniers, en transmission ou en réflexion, et plus spécialement la couleur de la peau et des cheveux.

Dans un mode de réalisation avantageux, l'invention permet encore de restituer sans dénaturation excessive la couleur d'un objet au moyen d'un dispositif de visualisation.

L'invention permet en outre de mesurer la couleur en chaque point d'un objet, même si ce dernier est de couleur non uniforme.

Bien entendu, l'invention n'est pas limitée à l'exemple de réalisation qui vient d'être décrit et l'on peut notamment utiliser d'autres dispositifs de visualisation, tels qu'une imprimante ou un écran à cristaux liquides.

**Revendications**

1. Procédé de correction de la réponse d'un dispositif de visualisation (4) comportant des trames de pixels, **caractérisé par le fait que** lors d'une transition du niveau de commande des pixels d'une même trame entraînant une variation de la luminance entre au moins un pixel de cette trame et le pixel immédiatement suivant, eu égard au sens de balayage de la trame, on choisit le niveau de commande dudit pixel immédiatement suivant en fonction de la vitesse de variation de la luminance des pixels situés sur une même trame lorsque le niveau de commande desdits pixels varie.

2. Procédé selon la revendication 1, **caractérisé par le fait que** l'on détermine une fonction de correction des non-linéarités dudit dispositif de visualisation (4) en affichant deux zones d'une même couleur mais avec des luminances susceptibles d'être différentes, la couleur de l'une des zones étant obtenue par une juxtaposition de pixels de niveaux de commande distincts et la couleur de l'autre zone étant obtenue par un ensemble de pixels de même niveau de commande, en rendant égales les luminances des deux zones pour un observateur en agissant sur le niveau de commande des pixels de l'une des zones, et en déduisant de la valeur des niveaux de commande des pixels de chacune desdites zones une information pour le calcul de ladite fonction de correction des non-linéarités du dispositif de visualisation.

3. Procédé selon la revendication 2, **caractérisé par le fait que** ladite zone composée de pixels de niveaux de commande distincts est tramée.

**4.** Procédé selon la revendication 3, **caractérisé par le fait que** ladite zone tramée comporte une trame sur deux qui est noire.

**5.** Procédé selon la revendication 3, **caractérisé par le fait que** ladite zone composée de pixels de niveaux de commande distincts comporte un pixel sur deux, à chaque trame, dont le niveau de commande est différent de celui du pixel précédent sur cette trame.

FIG.1

Re(λ)

I(λ)

FR(λ)    FV(λ)    FB(λ)

9

8    CCD    CCD    10    CCD

BR    BV    BB

$V_R$    $V_V$    $V_B$

11    A/N    A/N    A/N    13

FIG.2    R    12    V    B

FIG.3

FIG_4

FIG_6

FIG_5

FIG_7

FIG_8

FIG_9

FIG_10

**Office européen des brevets**

**RAPPORT DE RECHERCHE EUROPEENNE**

Numéro de la demande

EP 04 02 7392

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | EP 0 560 170 A (THOMSON CONSUMER ELECTRONICS) 15 septembre 1993 (1993-09-15) * colonne 2, ligne 4-10 * * figure 1 * ----- | 1-5 | G01J3/50 H04N5/00 |

**DOMAINES TECHNIQUES RECHERCHES (Int.Cl.7)**

G01J

Le présent rapport a été établi pour toutes les revendications

| Lieu de la recherche | Date d'achèvement de la recherche | Examinateur |
|---|---|---|
| Berlin | 7 janvier 2005 | Luck, W |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.................................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 04 02 7392

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

07-01-2005

| Document brevet cité au rapport de recherche | | Date de publication | Membre(s) de la famille de brevet(s) | | Date de publication |
|---|---|---|---|---|---|
| EP 0560170 | A | 15-09-1993 | DE | 69321386 D1 | 12-11-1998 |
| | | | DE | 69321386 T2 | 04-03-1999 |
| | | | EP | 0560170 A2 | 15-09-1993 |

EPO FORM P0460